# EUROPÄISCHE PATENTSCHRIFT

(11) **EP 2 160 315 B1**
(45) Veröffentlichungstag und Bekanntmachung des Hinweises auf die Patenterteilung: **27.02.2013**
(21) Anmeldenummer: 08758181.5
(22) Anmeldetag: 12.06.2008
(51) Int. Cl.: B62B 5/04

(54) **DIEBSTAHLSCHUTZSYSTEM FÜR MANUELL BEDIENBARE TRANSPORTWÄGEN**
ANTI-THEFT SYSTEM FOR MANUALLY OPERABLE TRANSPORT CARRIAGES
SYSTÈME DE PROTECTION CONTRE LE VOL POUR DES VÉHICULES DE TRANSPORT À COMMANDE MANUELLE

(30) Priorität: 13.06.2007 DE 102007027836
(43) Veröffentlichungstag der Anmeldung: 10.03.2010
(73) Patentinhaber: Fraunhofer-Gesellschaft zur Förderung der angewandten Forschung e.V., 80686 München (DE)
(72) Erfinder: SEIPEL, Björn, 61197 Florstadt (DE); KOCH, Thorsten, 64342 Seeheim-Jugenheim (DE); PFEIFFER, Thomas, 63814 Mainaschaff (DE); MELZ, Tobias, 64285 Darmstadt (DE)
(74) Vertreter: Rösler, Uwe
(86) Internationale Anmeldenummer: PCT/DE2008/000964
(87) Internationale Veröffentlichungsnummer: WO 2008/151618

(56) Entgegenhaltungen:
- DE-T2- 69 816 982
- DE-U1- 20 012 396
- DE-U1-202005 012 867

## Beschreibung

### Technisches Gebiet

Die Erfindung bezieht sich auf ein Diebstahlschutzsystem für manuell bedienbare Transportwägen, insbesondere für Einkaufswägen, die zur Fortbewegung über Rollräder verfügen, von denen wenigstens ein Rollrad mit einer das Rollverhalten des Rollrades beeinflussenden Einheit, im Weiteren kurz Einheit, ausgestattet ist, die aus einer Grundstellung, in der das wenigstens eine Rollrad unbeeinflusst ist, durch Aktivieren in eine das Rollverhalten des Rollrades beeinflussende Stellung überführbar ist, und zu deren Aktivierung jeweils eine Empfangseinheit vorgesehen ist, die ein Steuersignal empfängt, sobald der Transportwagen ein durch eine das Steuersignal generierende Überwachungsinfrastruktur festgelegtes, erlaubtes Areal verlässt.

### Stand der Technik

Als Schutz gegen unerlaubtes Entfernen von Einkaufswägen von Supermärkten, deren Verlust für den Supermarktbetreiber einen durchaus beträchtlichen finanziellen Schaden darstellt, sind Diebstahlschutzsysteme bekannt, deren vor Entwendung von Einkaufswägen abhaltende Wirkung weit über das weit verbreitete Münzpfandsystem hinausgeht, mit dem zwar ein geordneter Zusammenhalt nicht in Verwendung befindlicher Einkaufswägen angestrebt wird, gleichwohl nicht eine bewusste oder unbewusste Entwendung derartiger Einkaufswägen verhindert werden kann.

Derartige bekannte Diebstahlschutzsysteme basieren auf der Idee, ein oder mehrere Rollräder des Einkaufswagens ganz oder teilweise zu blockieren, sobald der Einkaufswagen einen bestimmten Nutzungsbereich, der üblicherweise der Fläche des Supermarktes sowie gegebenenfalls angrenzende Parkflächen entspricht, verlässt.

So geht aus der DE 698 16 982 T2 ein derartiges Diebstahlschutzsystem hervor, bei dem ein zu überwachendes Gebiet mit Hilfe einer Perimeterantenne umgeben ist, die kontinuierliche Steuersignale abgibt. Überfährt ein mit einem entsprechenden Empfänger ausgerüsteter Einkaufswagen eine von der Perimeterantenne überwachte Gebietsgrenze, so wird ein entsprechendes Bremssignal generiert, durch das ein am Einkaufswagen vorgesehenes Arretiergerät, zum arretieren bzw. blockieren eines Rollrades am Einkaufswagen aktiviert wird. Das Arretiergerät weist einen Schwenkmechanismus auf, der eine das Rollrad umgebende Halbschalenform zwischen das Rollrad und dem Boden schwenkt, so dass das Rollrad gegenüber dem Boden angehoben ist. In dieser Situation gerät die zumeist aus Hartmaterial gefertigte Halbschalenform in Kontakt mit dem Boden, so dass eine weitere Bedienung des Einkaufswagens nahezu unmöglich aber zumindest sehr erschwert wird.

Ein vergleichbares System ist der WO 98/34819 zu entnehmen, bei dem zur Entwendung von Einkaufswägen bei Überfahren einer durch eine Perimeterantenne vorgegebene Gebietsgrenze wenigstens ein Rollrad des Einkaufswagens mit einer innenliegenden Spreizbackenbremseinrichtung vollständig blockiert wird.

Alternativ zur Spreizbackenbremse geht aus der WO 2004/016467 A3 ein Arretiermechanismus für ein Rollrad eines Einkaufswagens hervor, bei dem das wenigstens eine zu blockierende Rollrad eine innenliegende Verzahnung aufweist, die bei Aktivierung eines entsprechenden Aktors in Eingriff mit einem entsprechenden mechanischen Gegenlager gebracht wird, so dass das Rollrad des Einkaufswagens vollständig blockiert wird. Ein ähnlicher Arretiermechnismus kann der US 5,315,290 entnommen werden, bei dem ein Solenoidspulen angetriebener Zapfen in eine entsprechende Ausnehmung innerhalb der Radnabe eines Rollrades eines Einkaufswagens einzugreifen vermag.

Eine etwas andere Art zur Beeinflussung des Rollverhaltens wenigstens eines an einem Einkaufswagen angebrachten Rollrades bei Überfahren einer für den Nutzer unsichtbaren Gebietsgrenze ist in der US 6,102,414 beschrieben. In diesem Fall erfolgt ein kontrolliertes Verschwenken eines um die Hochachse drehbar gelagerten Rollrades eines Einkaufswagens derart, so dass der Einkaufswagen zwangsgeführt im Kreis fährt. Eine geradlinige Führung des Einkaufswagens ist damit unmöglich.

Allen bisher bekannten, wenigstens ein Rollrad eines Einkaufswagens blockierende Systeme haftet der Nachteil an, dass die abgebremsten Rollräder bei mutwilligem, zum Teil gewaltsamen Weiterschieben eines derart blockierten Einkaufswagens irreversible Schäden annehmen, die bishin zum Totalverlust des gesamten Einkaufswagen führen können. Ferner zeichnen sich sämtliche Blockier- bzw. Bremssysteme sowie auch das vorstehend skizzierte System zum Verschwenken der Laufrichtung eines um die Hochachse drehbar gelagerten Rollrades durch einen komplizierten mechanischen Aufbau und damit verbunden durch einen beträchtlichen Kostenfaktor aus.

Ferner wird auf die DE 20 2005 011 625 U1 verwiesen, die einen Transportwagen beschreibt, an dem ein über die Fahrbewegung des Transportwagens antreibbarer Stromerzeuger angeordnet ist. Im normalen Fahrbetrieb wird mittels des Stromerzeugers Strom erzeugt und in einem Stromspeicher abgespeichert. Gesteuert durch ein externes Bremssignal arbeitet der Stromerzeuger alternativ als steuerbare Bremseinrichtung. Dabei wird über das externe Bremssignal eine Kurzschlussbrücke in der Motorsteuerung angesteuert, so dass der Stromerzeuger als kurzgeschlossener Generator wirkt und die Rollbewegung des Rollrades bremst. Je schneller der Nutzer schiebt, desto höher sind das generatorische Gegenmoment und letztlich die Bremskraft.

Die DE 10 2006 022 754 A1 sowie DE 10 2006 016 387 A1 offenbaren jeweils einen Transportwagen mit einer Bremseinrichtung, die über ein externes Signal ansteuerbar ist. Im Bremsfall wird ein Bremselement mit dem Untergrund in Eingriff gebracht, wobei mindestens eine Laufrolle vom Untergrund abgehoben wird. Die Bremseinrichtung kann wahlweise am Gestell des Transportwagens als separate Einrichtung angebracht sein.

Der DE 20 2005 008098 U1 ist eine Vorrichtung zur Hemmung der Schwenkbewegung von Rollen entnehmbar, so dass das Schieben des Transportwagens unmöglich bzw. stark erschwert ist. Dabei werden insbesondere zwei Rollen, die auf einer Querstrebe angebracht sind, gleichzeitig so beeinflusst, dass sie nicht mehr in eine zueinander parallele Position geschwenkt werden können.

Die US 5 357 182 A offenbart eine Anordnung, mit der die Rollbewegung des Rollrades beeinflusst werden kann. Das Rollrad ist koaxial mit einem Zahnrad verbunden. Über eine Kette ist dieses mit einem auf einer Antriebswelle eines Generators montierten zweiten Zahnrad gekoppelt. Während des Schiebens im erlaubten Bereich wird durch die Rollbewegung mittels des Generators Strom erzeugt und eine Batterie gespeist. Wenn der Wagen den erlaubten Bereich verlässt, wird der Generator kurz geschlossen und der Wagen elektromagnetisch gebremst.

### Darstellung der Erfindung

Der Erfindung liegt die Aufgabe zugrunde, ein Diebstahlschutzsysteme für manuell bedienbare Transportwägen, insbesondere für Einkaufswägen, die zur Fortbewegung über Rollräder verfügen, das Diebstahlschutzsystem beinhaltend wenigstens eines dieser Rollrad mit einer das Rollverhalten des Rollrades beeinflussenden Einheit ausgestattet ist, die aus einer Grundstellung, in der das wenigstens eine Rollrad unbeeinflusst ist, durch Aktivieren in eine das Rollverhalten des Rollrades beeinflussende Stellung überführbar ist, und zu deren Aktivierung jeweils eine Empfangseinheit vorgesehen ist, die ein Steuersignal empfängt, sobald der Transportwagen ein durch eine das Steuersignal generierende Überwachungsinfrastruktur festgelegtes, erlaubtes Areal verlässt, derart weiterzubilden, dass einerseits die für die Beeinflussung des Rollverhaltens wenigstens eines Rollrades erforderlichen Maßnahmen konstruktiv möglichst einfach und kostengünstig realisierbar sind, andererseits einen reversiblen Funktionsmechanismus erlauben, d.h. nachdem eine Aktivierung der das Rollverhalten des Rollrades beeinflussenden Einheit erfolgt ist, es gleichsam möglich sein soll, durch entsprechende Deaktivierung der Einheit das Rollrad wieder in einen freigängigen Zustand überzuführen. Insbesondere sollen dauerhafte Schäden an den Rollrädem vermieden werden, selbst im Falle eines gewaltsamen Weiterschiebens eines bereits blockierten Einkaufswagens.

Eine Lösung der der Erfindung zugrunde liegenden Aufgabe ist im Anspruch 1 angegeben. Zwei alternative, lösungsgemäße Ausführungsvarianten des Diebstahlschutzsystems sind Gegenstände der Ansprüche 8 und 13. Das lösungsgemäße Diebstahlschutzsystem in vorteilhafter Weise weiterbildende Merkmale sind Gegenstand der Unteransprüche sowie der weiteren Beschreibung insbesondere unter Bezugnahme auf die Ausführungsbeispiele zu entnehmen.

Lösungsgemäß zeichnet sich ein Diebstahlschutzsystem für manuell bedienbare Transportwägen, insbesondere für Einkaufswägen gemäß den Merkmalen des Oberbegriffes des Anspruches 1 dadurch aus, dass das Aktorsystem eine fest mit der Drehachse des Rollrades verbundene Bremsscheibe mit einem Umfangsrand beinhaltet, der eine koaxial zur Drehachse orientierte Mantelfläche aufweist, längs der über wenigstens einen Abschnitt der Mantelfläche ein bandförmiges Bremsmittel, vorzugsweise in Form eines Metallbandes, in losem Reibkontakt stehend beinhaltet ist, das relativ zur mitrotierenden Bremsscheibe ortsfest angebracht ist. Je nach Anpresskraft, mit der das bandförmige Bremsmittel an den Umfangsrand der Bremsscheibe anliegt, kann ein unterschiedlich stark ausgeprägtes Bremsmoment auf die Bremsscheibe und somit auf das Rollrad übertragen werden. Im einfachsten Fall sorgt ein Aktor, der in Wirkverbindung mit dem bandförmigen Bremsmittel steht, zur gezielten Variation der in losem Reibkontakt zwischen dem bandförmigen Bremsmittel und der Mantelfläche der Bremsscheibe charakterisierenden Anpresskraft, indem der Aktor zwischen wenigstens zwei Aktorstellungen reversibel überführt ist, wobei der Aktor in einer ersten Aktorstellung eine maximale und in der zweiten Aktorstellung eine minimale Anpresskraft initiiert. Je nach Ausbildung und Anordnung und Betriebsweise des Aktors ist es selbstverständlich möglich die Anpresskraft mit der das bandförmige Bremsmittel auf der Mantelfläche der Bremsscheibe lastet, graduell, d.h. kontinuierlich einzustellen.

In einer ersten Ausführungsform weist das bandförmige Bremsmittel zwei Bandenden auf, von denen ein Bandende an einem festen Gegenlager, das mit dem Rollrad und damit verbundenen Bremsscheibe nicht mit rotiert, und das andere Bandende nicht mit dem Aktor verbunden ist, der gleichsam an einem festen, nicht mit dem Rollrad mitrotierenden Gegenlager fest verbunden ist. Der Aktor vermag dabei beispielsweise durch Linearauslenkung die längs des bandförmigen Bremsmittels wirkende Zugspannung zu variieren, wodurch die Anpresskraft, mit der das bandförmige Bremsmittel abschnittsweise längs der Mantelfläche der Bremsscheibe anliegt, variiert werden kann.

Eine andere Möglichkeit zur Ausbildung des bandförmigen Bremsmittels sieht ein als Endlosband gefertigtes Metallband vor, das die Form einer Bandschlinge annimmt, die die Mantelfläche der Bremsscheibe zumindest hälftig umschließt. Ferner ist ein Aktor vorgesehen, der die Bandschlinge unter Zugspannung hält, so dass die Bandschlinge mit variabler Anpresskraft längs der hälftigen Mantelfläche der Bremsscheibe zur Anlage kommt. Um zu vermeiden, dass das bandförmige Bremsmittel durch die Rotation der Bremsscheibe gleichfalls in Drehbewegung versetzt wird, ist das als Bandschlinge ausgebildete bandförmige Bremsmittel fest mit dem Aktor verbunden, der selbst an einem relativ zur Drehbewegung der Bremsscheibe und des damit verbundenen Rollrades ruhenden Gegenlagers angebracht ist. Um die Zugspannung längs der Bandschlinge zu variieren sieht eine Möglichkeit zur Ausbildung des Aktors ein linear bewegliches Stellglied vor, das mit dem bandförmigen Bremsmittel lokal verbunden ist und dieses zur Erhöhung der längs des Bremsmittels wirkenden Zugspannung von der Bremsscheibe weg bewegt. Soll hingegen die Zugspannung verringert werden, so gilt es das entsprechende Stellglied in Richtung der Bremsscheibe zu verfahren. Jederzeit sollte jedoch gewährleistet sein, dass das bandförmige Bremsmittel stets unter Ausübung einer Mindestreibkraft an der Mantelfläche der Bremsscheibe anliegt, um zu vermeiden, dass das Bremsmittel seitlich von der Mantelfläche abrutscht. Die Reibkraft kann jedoch so gering eingestellt werden, dass sich das daraus ergebende Bremsmoment auf die Bremsscheibe und damit verbunden auf das Rollrad für den Benutzer bzw. Kunden als nicht oder kaum wahrnehmbar einstellt. Weitere Einzelheiten zu dieser Ausbildungsform können unter Bezugnahme auf das entsprechende Ausführungsbeispiel im Weiteren entnommen werden.

Eine weitere alternative lösungsgemäße Ausbildungsform für das Aktorsystem sieht ein fest mit der Drehachse des Rollrades verbundenes, scheibenartig ausgebildetes Mittel vor, das über eine das Mittel peripher umgebende Eingriffskontur, beispielsweise in Form einer Aussenverzahnung, verfügt. Drehfest mit dem Rollrad und radial zur Eingriffskontur beabstandet, ist darüber hinaus ein sogenannter Rotationsdämpfer vorgesehen, der auf dem hydraulischem oder elektrodynamischen Wirkprinzip basiert und gleichfalls über eine scheibenartig ausgebildete Gestalt verfügt, an deren Umfangsrand Eingriffselemente angeordnet sind, die in Eingriff mit der Eingriffskontur des vorstehend erläuterten scheibenartig ausgebildeten Mittels bringbar sind. Der am Rollrad befestigte Rotationsdämpfer ist derart angebracht, dass der Rotationsdämpfer aktorisch unterstützt, bspw. längs einer linearen Trajektorie in Richtung des koaxial mit der Drehachse des Rollrades verbundenen scheibenartig ausgebildeten Mittels bewegbar ist, so dass die Eingriffselemente des Rotationsdämpfers in Eingriff mit der Eingriffskontur des scheibenartig ausgebildeten Mittels treten können. Der Rotationsdämpfer kann z.B. auch mit Hilfe eines Schwenkarms um einen Drehpunkt, der nicht mit der Achse der Rollrades identisch ist, in Richtung des Zahnrades geschwenkt werden. So ist beispielsweise ein sanfteres Einspuren der Zähne möglich.

In dieser Position übt der Rotationsdämpfer, zu dessen Drehbewegung ein weitaus größerer Drehwiderstand zu überwinden ist als zur Drehung des Rollrades, ein definiert vorgebbares Bremsmoment auf das Rollrad aus, das vorzugsweise so groß gewählt ist, dass ein Weiterschieben des Einkaufswagens mit einer erhöhten Kraftanstrengung verbunden ist. Andererseits sollte das Bremsmoment nicht zu groß gewählt sein, so dass das abgebremste Rollrad nicht vollständig blockiert. Insbesondere gilt es selbst bei mutwilligem Weiterschieben einen sogenannten "Bremsplatten" an den Rollrädern zu vermeiden.

Wie bereits vorstehend kurz angedeutet, basieren an sich bekannte Rotationsdämpfer auf dem hydraulischem Wirkprinzip, bei dem es gilt eine Art Schaufelrad bestückte Welle innerhalb eines Fluids in Rotation zu versetzen, wozu es jedoch die Überwindung großer Drehmomente bedarf. Ebenso könnte erwogen werden anstelle eines hydraulischen Rotationsdämpfers einen als Generator betriebenen Elektromotor, beispielsweise einen Schrittmotor, als Rotationsdämpfer einzusetzen, bei dem es möglich ist, das Bremsmoment durch Einstellen des Kurzschlussstromes entsprechend anzupassen.

Mit Hilfe des vorzugsweise als Linearantrieb ausgebildeten Aktors ist es gleichsam möglich den Rotationsdämpfer von dem scheibenartig ausgebildeten Mittel radialwärts zu beabstanden, so dass Rollrad wieder ungebremst betrieben werden kann. Unabhängig von dem eingangs erläuterten Diebstahlschutzsystem, das eine entsprechende automatische Aktivierung des Aktorsystems und einer damit verbundenen Einflussnahme auf das Rollverhalten des wenigstens einen Rollrades bei unauthorisiertem Verlassen eines durch eine Überwachungsinfrastruktur festgelegten erlaubten Areals vorsieht, ist es ebenso denkbar, die Ausbildung des vorstehend bezeichneten Aktorsystems mittels Rotationsdämpfer auch durch Schalterbetätigung durch den Kunden bewusst zu aktivieren, bspw. zum Zwecke des Verhindems des Wegrollens des Einkaufswagens, beispielsweise auf abschüssigem Gelände, wie man es zumeist auf diversen Parkplätzen antrifft.

Das vorstehend erläuterte Aktorsystem, das durch Aktivieren ein auf das Rollrad dosiert vorgebbares Bremsmoment ausübt, wodurch das Rollrad daran gehindert wird unbeeinflusst um eine dem Rollrad zuordenbare Drehachse zu rotieren, beispielsweise unter Nutzung einer Bandbremse oder des vorstehend bezeichneten Rotationsdämpfers, sieht eine weitere lösungsgemäße Ausbildung des für das bezeichnete Diebstahlschutzsystem konfektionierte Aktorsystems einen Mechanismus vor, der durch Aktivieren eine aussermittige Verschiebung der dem Rollrad zuordenbare Drehachse relativ zum Umfangsrand des Rollrades bedingt. Durch kontrolliertes Verlagern der Drehachse des Rollrades relativ zu dessen Symmetrieachse kann erreicht werden, dass der vormals gleichmäßige Lauf des Rollrades, der bei symmetrischer Anordnung der Drehachse relativ zum Rollrad nahezu momentenfrei erfolgt, absichtlich unrund, d.h. wuchtbehaftet wird und dadurch ein Schieben bzw. Weiterschieben des Einkaufswagens erschwert oder ganz blockiert wird. Die kontrollierte Verschiebung der Drehachse des Rollrades kann über einen im oder am Rollrad angebrachten Exzentermechanismus und einem Elektromotor mit Schneckenwelle realisiert werden wie dies die weiteren Ausführungen unter Bezugnahme auf das entsprechende Ausführungsbeispiel zeigen werden.

Allen vorstehend erläuterten, lösungsgemäß ausgebildeten Ausführungsvarianten ist gemeinsam, dass die Aktivierung bzw. Deaktivierung des jeweiligen Aktorsystems vollständig reversibel erfolgen kann, d.h. die gesteuerte Einflussnahme auf das Rollverhalten des wenigstens einen Rollrades kann bei Bedarf in gleicher Weise wie die Aktivierung auch wieder rückgängig gemacht werden. In vorteilhafter Weise kann dies in Form eines entsprechend über Funk abgesendeten Steuersignals erfolgen. Zum anderen, dies werden die konkreten Ausführungsbeispiele unter Bezugnahme auf die Figuren weiter erhellen, können die für die Aktorsysteme erforderlichen Baukomponenten bezüglich ihrer Anzahl gering und in ihrer Ausprägung einfach und letztlich kostengünstig gehalten werden.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1a, b: schematisierte Darstellung der Funktionsweise einer Bandbremse,
- Fig. 2a, b: schematisierte Darstellung einer auf dem Rotationsdämpfer-Prinzip beruhenden Bremsanordnung, sowie
- Fig. 3a, b: schematisierte Darstellungen zur Erläuterung eines Exzentermechanismus.

### Wege zur Ausführung der Erfindung, gewerbliche Verwendbarkeit

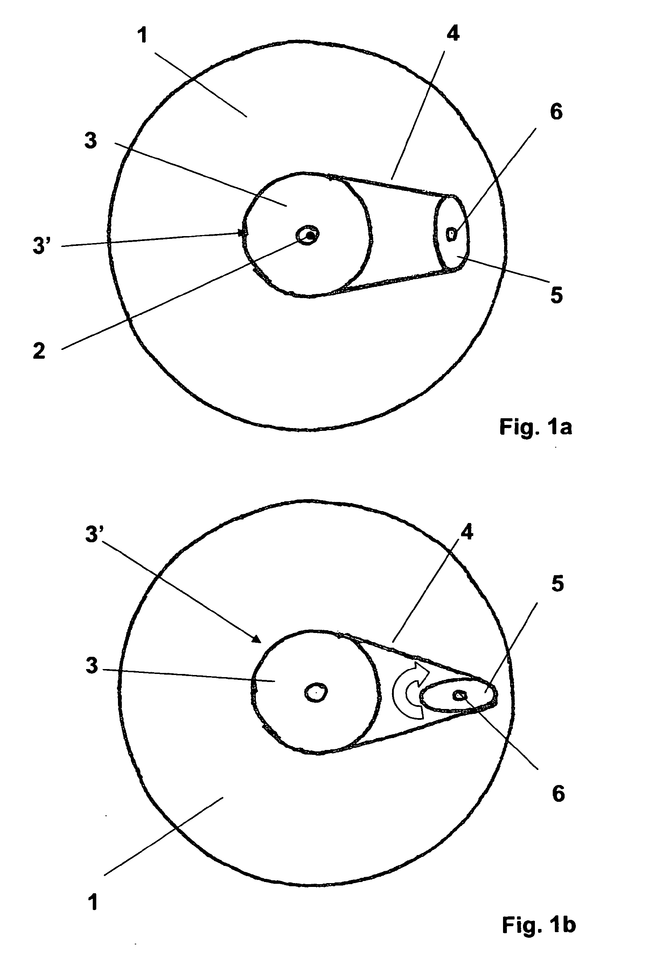

In Figur 1a ist in seitlicher Ansicht ein Rollrad 1 dargestellt, an dem koaxial zur Drehachse 2 des Rollrades 1 eine Bremsscheibe 3 fest angebracht ist. Die Bremsscheibe 3 weist einen Umfangsrand 3' auf, längs dem abschnittsweise ein bandförmiges Bremsmittel 4, in Form einer Endlosbandschlinge angelegt ist. Die aus einem Metallband gefertigte Endlosbandschlinge 4 ist zudem an einer elliptisch ausgebildeten Umlenkkontur 5 fest angebracht, die ihrerseits drehbar fest um eine Drehachse 6 angelenkt ist, die über einen elektromotorischen Aktor (nicht dargestellt) kontrolliert in Rotation versetzbar ist. Die in Figur 1 a dargestellte Situation stellt das Rollrad 1 in einem weitgehend ungebremsten Zustand dar, d.h. die Bandschlinge 4 liegt im losen Reibkontakt auf dem hälftigen Umfangsrand der Bremsscheibe 3 auf, ohne diese merklich abzubremsen. Hierzu ist die längs der Bandschlinge 4 wirkende Zugspannung gerade so eingestellt, so dass der vorstehend bezeichnete weitgehende "Freilauf" des Rollrades 1 gewährleistet ist. In Figur 1b hingegen ist die Umlenkkontur 5 um 90 Grad um die Achse 6 gedreht, wodurch die Bandschlinge 4 gegenüber der in Figur 1 a dargestellten Position einen gespannten Zustand einnimmt und hierdurch mit erhöhter Anpresskraft auf den Umfangsrand 3' der Bremsscheibe 3 lastet, wodurch ein erhöhtes Bremsmoment auf die Bremsscheibe 3 und letztlich auf das Rollrad 1 ausgeübt wird. Selbstverständlich ist es möglich und anhand des in Figuren 1a und b dargestellten Wirkprinzips klar ersichtlich, dass je nach Drehstellung der Umlenkkontur 5 die längs der Bandschlinge 4 wirkende Zugspannung graduell zwischen einem minimalen und maximalen Bremsmoment variiert werden kann.

Bezugnehmend auf das vorstehend beschriebene Diebstahlschutzsystem wird die in Figur 1a dargestellte Situation, die der Normalsituation entspricht, solange eingenommen, solange der Einkaufswagen innerhalb eines erlaubten Areals bewegt wird. Wird hingegen der Einkaufswagen über eine für den Kunden nicht sichtbare Arealgrenze hinausgeschoben, so registriert die an dem Einkaufswagen vorgesehene Empfangseinheit ein entsprechendes Steuersignal durch das die Umlenkkontur 5 aus der Stellung gemäß Figur 1 a in die Stellung gemäß Figur 1 b (siehe Pfeildarstellung in Figur 1 b) überführt wird.

Selbstverständlich ist es möglich durch ein geeignetes Deaktivierungssignal die Umfangskontur 5 aus der Stellung gemäß Figur 1b in den Zustand gemäß Figur 1a überzuführen.
Unter Verwendung eines zusätzlichen Energiespeichers, beispielsweise in Form einer Stahlfeder, kann der Bremsvorgang auch über längere Zeit ohne zusätzliche äußere Energiezufuhr aufrechterhalten werden. Die Stahlfeder könnte man dazu verwenden, um an dem Bremsband zu ziehen und damit eine Bremskraft auszuüben. Dies wäre dann denkbar, wenn man statt eines Elektromotors beispielsweise einen bistabilen Elektromagneten verwendet, den man zwischen zwei Positionen schalten kann.

Es liegt auf der Hand, dass anstelle des in Figur 1a und b dargestellten um die Drehachse 6 angeordneten Umfangskontur, die mit Hilfe eines Elektromotors kontrolliert drehbar ist ein Linearantrieb eingesetzt werden kann, der durch entsprechende Radialbewegung, in Richtung Drehachse 2 bzw. von ihr weg die Zugspannung längs der Bandschlinge 4 variiert werden kann. Derartige Linearaktoren lassen sich in vorteilhafter Weise unter Verwendung an sich bekannter Wandlerwerkstoffe, wie beispielsweise Formgedächtnislegierungen, piezokeramische Aktoren oder auf magnetostriktiven Aktoren einsetzen.

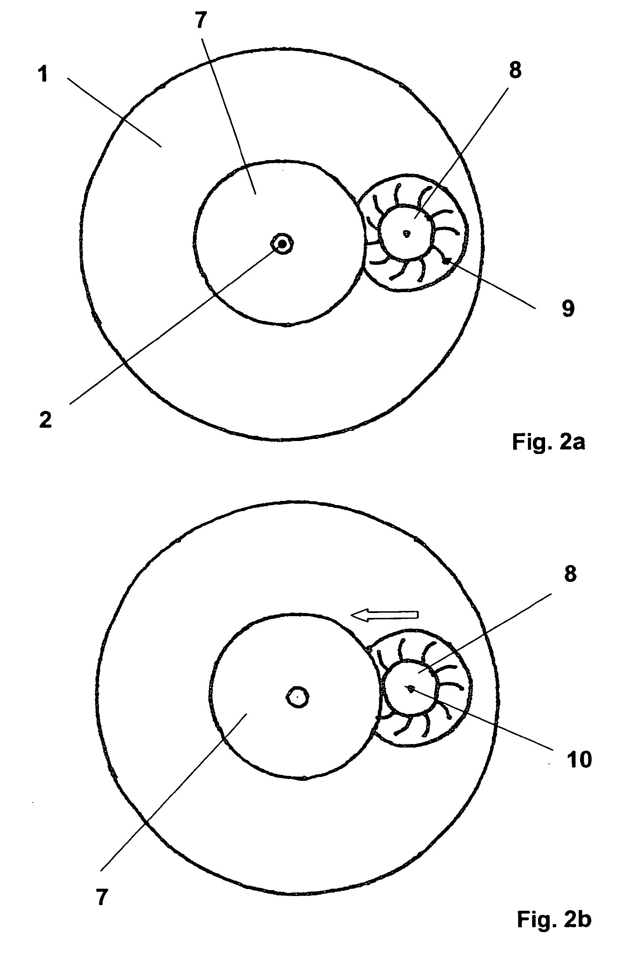

In den Figuren 2a und b ist ein Aktorsystem dargestellt, das auf dem Prinzip eines Rotationsdämpfers basiert. So sei angenommen, das koaxial zur Drehachse 2 des Rollrades 1 ein scheibenartig ausgebildetes Mittel 7 fest mit dem Rollrad 1 verbunden ist, längs dessen Umfangsrand eine Eingriffskontur, beispielsweise in Form einer Aussenverzahnung, vorgesehen ist. Gleichsam drehfest zur Drehwelle 2 ist am Rollrad 1 ein Rotationsdämpfer 8 angebracht, der aus einer radial äußeren Position, wie in Figur 2a dargestellt ist, in eine radial innenliegende Position, wie sie in Figur 2b dargestellt ist, überführbar ist. Der Rotationsdämpfer 8 ist gleichsam scheibenartig ausgebildet und weist an seinem peripheren Umfangsrand Eingriffselemente 9 auf, die im Zustand der radial inneren Position gemäß Figur 2b in Eingriff mit der Eingriffskontur des scheibenartig ausgebildeten Mittels 7 tritt. Da der Rotationsdämpfer 8 seinerseits drehbar gelagert ist um die dem Rotationsdämpfer 8 zuordenbare Drehachse 10 und zur Ausführung einer Drehbewegung um die Drehachse 10 einen weitaus größeren Drehwiderstand zu überwinden hat als das Rollrad 1 bei Umdrehung um die Drehachse 2, übt der Rotationsdämpfer 8, der in Eingriff mit dem scheibenartig ausgebildeten Mittel 7 gemäß Figur 2b steht, ein Bremsmoment auf das Rollrad 1 aus. Zur radial gerichteten Linearbewegung (siehe Pfeildarstellung in Fig. 2b) des Rotationsdämpfers 8 dient ein geeignet ausgebildeter Linearstellantrieb, der beispielsweise auf Basis eines Formgedächtnismetalls in Kombination mit einer entsprechenden Rückstellfeder ausgebildet sein kann.

Neben an sich bekannten, auf dem hydraulischem Wirkprinzip basierenden Rotationsdämpfern 8 ist es gleichfalls denkbar einen als Generator betriebenen Elektromotor als Rotationsdämpfer einzusetzen, dessen Drehmoment durch einen geeigneten Kurzschlussstrom gezielt einstellbar ist.

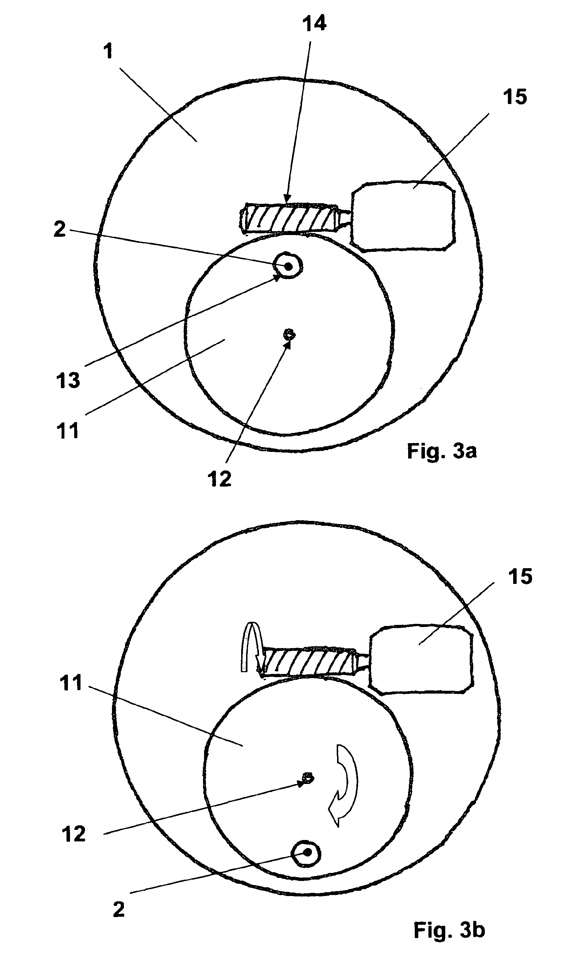

In den Figuren 3a und b ist ein Exzentermechanismus dargestellt, der im Unterschied zu den vorstehend beschriebenen Ausführungsbeispielen gemäß der Figuren 1 und 2 kein Bremsmoment zur Unterdrückung eines Freilaufes des Rollrades 1 generiert, sondern vielmehr eine gezielte Umwucht beim Abrollen des Rollrades 1 relativ zu dessen Drehachse 2 herbeiführt. So sei gemäß Figur 3a angenommen, dass an dem Rollrad 1 ein scheibenartiges Mittel 11 über die dem scheibenartigen Mittel 11 zuordenbare Drehachse 12 drehbar fest angebracht ist. Zusätzlich durchragt die Drehachse 2 des Rollrades 1 eine im scheibenartigen Mittel 11 vorgesehene Ausnehmung 13, in der die Drehachse 12, d.h. die Drehwelle, um die sich das Rollrad 1 dreht, drehbar gefasst ist. Das scheibenartige Mittel 1 weist in dem in Figur 3a und b dargestellten Ausführungsbeispiel eine nicht weiter dargestellte Aussenverzahnung auf, die im Eingriff mit einem Schneckengetriebe 14 eines spindelartig ausgebildeten Antriebes 15 steht.

Wird nun der spindelartig ausgebildete, elektromotorische Antrieb 15 in Rotation versetzt, siehe Pfeildarstellung in Figur 3b, so rotiert das scheibenartig ausgebildete Mittel 11 um die Drehachse 12 und mit diesem zugleich auch die Drehachse des Rollrades 1, wodurch die Drehachse 2 des Rollrades 1 in eine exzentrische Position gemäß Figur 3b überführt wird. Die Ansteuerung des spindelartig ausgebildeten Antriebes erfolgt gleichsam nach Empfang eines entsprechenden Steuersignals, das ein Verlassen eines erlaubten Areals anzeigt. Je nach Verlagerung der zum Rollrad 1 zugehörigen Drehachse 2 lässt sich das Schieben eines Einkaufswagens erschweren oder gar ganz blockieren. Anhand der in Figur 3 dargestellten Skizzen kann gleichfalls entnommen werden, dass zur Realisierung eines derartigen Aktorsystems nur wenige und kostengünstige Komponenten erforderlich sind, die eine robuste Lösung zur eingangs gestellten Aufgabe der Schaffung eines wirksamen und robusten und gleichfalls auch kostengünstigen Bremssystems, das zur Integration in ein Diebstahlschutzsystem für Einkaufswägen dient.

### Bezugszeichenliste

- 1: Rollrad
- 2: Drehachse
- 3: Bremsscheibe
- 3': Umfangsrand
- 4: bandförmiges Bremsmittel, Bandschlinge
- 5: Umlenkkontur
- 6: Rotationsachse
- 7: scheibenartig ausgebildetes Mittel
- 8: Rotationsdämpfer
- 9: Eingriffselemente
- 10: Drehachse
- 11: scheibenartiges Mittel
- 12: Drehachse
- 13: Ausnehmung
- 14: Schneckenwelle
- 15: spindelartiger Antrieb

## Patentansprüche

1. Diebstahlschutzsystem für manuell bedienbare Transportwägen, insbesondere für Einkaufswägen, die zur Fortbewegung über Rollräder verfügen, das Diebstahlschutzsystem beinhaltend wenigstens eines dieser Rollräder, von denen wenigstens ein Rollrad (1) mit einer das Rollverhalten des Rollrades beeinflussenden Einheit, im Weiteren kurz Einheit, ausgestattet ist, die aus einer Grundstellung, in der das wenigstens eine Rollrad (1) unbeeinflusst ist, durch Aktivieren in eine das Rollverhalten des Rollrades (1) Stellung überführbar ist, und zu deren Aktivierung jeweils eine Empfangseinheit vorgesehen ist, die ein Steuersignal empfängt, sobald der Transportwagen ein durch eine das Steuersignal generierende Überwachungsinfrastruktur festgelegtes, erlaubtes Areal verlässt, wobei die Einheit ein Aktorsystem beinhaltet, das durch Aktivieren ein auf das Rollrad (1) dosiert vorgebbares Bremsmoment ausübt, welches das Rollrad (1) daran hindert, unbeeinflusst um eine dem Rollrad zuordenbare Drehachse (2) zu rotieren,
**dadurch gekennzeichnet, dass** das Aktorsystem eine fest mit der Drehachse (2) des Rollrades (1) verbundene Bremsscheibe (3) mit einem Umfangsrand (3') beinhaltet, der eine koaxial zur Drehachse (2) orientierte Mantelfläche aufweist, längs der über wenigstens einen Abschnitt der Mantelfläche ein bandförmiges Bremsmittel (4) in losem Reibkontakt stehend beinhaltet ist, das relativ zur mitrotierenden Bremsscheibe (3) ortsfest ist,
das bandförmige Bremsmittel (4) mit einem Aktor des Aktorsystems in Wirkverbindung steht, durch den eine den losen Reibkontakt zwischen dem bandförmigen Bremsmittel (4) und der Mantelfläche der Bremsscheibe (3) charakterisierende Anpresskraft variierbar ist und dass der Aktor zwischen wenigstens zwei Aktorstellungen, eine erste und eine zweite Aktorstellung, reversibel überführbar ist, wobei der Aktor in der ersten Aktorstellung eine maximale und in der zweiten Aktorstellung eine minimale Anpresskraft initiiert.

2. Diebstahlschutzsystem nach Anspruch 1,
**dadurch gekennzeichnet, dass** das bandförmige Bremsmittel (4) zwei Bandenden aufweist, von denen ein Bandende an einem festen Gegenlager und das andere Bandende mit dem gleichfalls an einem festen Gegenlager angebrachten Aktor verbunden ist.

3. Diebstahlschutzsystem nach Anspruch 1,
**dadurch gekennzeichnet, dass** das bandförmige Bremsmittel (4) als Endlosband in Form einer Bandschlinge ausgebildet ist, die die Mantelfläche der Bremsscheibe (3) zumindest hälftig umschließt, und
dass der Aktor derart angeordnet und ausgebildet ist, so dass die Bandschlinge (4) vermittels des Aktors unter Zugspannung gehalten wird.

4. Diebstahlschutzsystem nach einem der Ansprüche 1 bis 3,
**dadurch gekennzeichnet, dass** der Aktor ein linearbewegliches Stellglied aufweist, das mit dem bandförmigen Bremsmittel (4) verbunden ist.

5. Diebstahlschutzsystem nach Anspruch 4,
**dadurch gekennzeichnet, dass** der Aktor einen Wandlerwerkstoff aufweist, bestehend aus einem Material der nachfolgenden Gruppe: Piezoelektrische Keramik, magnetostriktives Material, Formgedächtnismetall.

6. Diebstahlschutzsystem nach einem der Ansprüche 1 bis 3,
**dadurch gekennzeichnet, dass** der Aktor einen Drehantrieb aufweist mit einer Drehachse, an der eine Umlenkkontur (5) vorgesehen ist, längs der das bandförmige Bremsmittel (4) angelenkt ist.

7. Diebstahlschutzsystem nach Anspruch 6,
**dadurch gekennzeichnet, dass** der Drehantrieb als Elektromotor ausgebildet ist.

8. Diebstahlschutzsystem nach dem Oberbegriff des Anspruches 1,
**dadurch gekennzeichnet, dass** das Aktorsystem ein fest mit der Drehachse (2) des Rollrades (1) verbundenes, scheibenartig ausgebildetes Mittel aufweist, das über eine das Mittel peripher umgebende Eingriffskontur verfügt,
dass drehfest mit dem Rollrad (1) verbunden und radial zur Eingriffskontur beabstandet ein Rotationsdämpfer (8) vorgesehen ist, der Eingriffselemente (9) aufweist, die in Eingriff mit der Eingriffskontur bringbar sind, und
dass der Rotationsdämpfer (8) aus einer ersten radialen Position, in der kein Eingriff zur Eingriffskontur des Mittels besteht, in eine zweite radiale Position verfahrbar ist, in der die Eingriffselemente (9) in Wirkverbindung mit der Eingriffskontur des Mittels treten.

9. Diebstahlschutzsystem nach Anspruch 8,
**dadurch gekennzeichnet, dass** der Rotationsdämpfer (8) drehbar auf dem Rollrad (1) angeordnet ist, und
dass der Rotationsdämpfer (8) einen größeren Drehwiderstand als das Rollrad (1) aufweist, so dass der Rotationsdämpfer (8) in der zweiten Position ein Bremsmoment auf das Rollrad (4) ausübt.

10. Diebstahlschutzsystem nach Anspruch 8 oder 9
**dadurch gekennzeichnet, dass** der Rotationsdämpfer (8) mit einem ansteuerbaren Linearabtrieb zwischen der ersten und zweiten Position und umgekehrt überführbar ist.

11. Diebstahlschutzsystem nach Anspruch 10,
**dadurch gekennzeichnet, dass** der Linearantrieb einen Wandlerwerkstoff aufweist, bestehend aus einem Material der nachfolgenden Gruppe: Piezoelektrische Keramik, magnetostriktives Material, Formgedächtnismetall.

12. Diebstahlschutzsystem nach einem der Ansprüche 8 bis 11,
**dadurch gekennzeichnet, dass** der Rotationsdämpfer (8) ein hydraulischer Rotationsdämpfer ist, oder
dass der Rotationsdämpfer (8) einen als Generator betriebenen Elektromotor aufweist, dessen Bremsmoment durch Einstellen eines Kurzschlussstromes skalierbar ist.

13. Diebstahlschutzsystem nach dem Oberbegriff des Anspruches 1,
**dadurch gekennzeichnet, dass** das Aktorsystem durch Aktivieren eine außermittige Verschiebung der dem Rollrad (1) zuordenbare Drehachse (2) relativ zum Umfangsrand des Rollrades (1) bedingt, und
dass die Drehachse (2) des Rollrades (1) aus einer ersten Position, in der die Drehachse (3) das Rollrad (1) mittig durchragt, in eine zweite Position einer überführbar ist, in der das Rollrad (1) um die Drehachse (2) exzentrisch rotiert.

14. Diebstahlschutzsystem nach Anspruch 13,
**dadurch gekennzeichnet, dass** drehbar am Rollrad (1) ein scheibenartiges Mittel (11), im Weiteren Mittel, mit einer Außenverzahnung derart angebracht ist, das eine dem Mittel zuordenbare Drehachse (12) außermittig zum Rollrad (1) angebracht ist,
dass das Mittel eine Ausnehmung vorsieht, durch die die Drehachse (2) des Rollrades (1) ragt und in der Drehachse (2) drehbar sowohl zum Mittel als auch zum Rollrad (1) gelagert ist, und
dass ein spindelartig ausgebildeter Antrieb vorgesehen ist, der in Eingriff mit der Außenverzahnung des Mittels steht, das Mittel drehfest um die dem Mittel zuordenbare Drehachse (12) lagert und der bei Aktivieren das Mittel um die dem Mittel zuordenbare Drehachse (1) dreht.

15. Diebstahlschutzsystem nach Anspruch 14,
**dadurch gekennzeichnet, dass** der Spindelartig ausgebildete Antrieb an dem Rollrad angebracht ist.

## Claims

1. An anti-theft system for manually operable transport carts, in particular for shopping trolleys, which for locomotion possess roller wheels (1), the anti-theft system including at least one of these roller wheels of which at least one roller wheel (1) is equipped with a unit influencing the rolling behaviour of the roller wheel (1), in the following, briefly unit, which out of a basic position, in which the at least one roller wheel (1) is uninfluenced, can be transferred through activation into a position influencing the rolling behaviour of the roller wheel (1), and for the activating of which a receiving unit each is provided, which receives a control signal as soon as the transport trolley leaves a permitted area determined by a monitoring infrastructure generating the control signal, wherein the unit includes an actuator system, which through actuating exerts a braking moment on the roller wheel (1) that can be predetermined in a metered manner, which prevents the roller wheel (1) from rotating about a rotary axis (2) that can be assigned to the roller wheel in an uninfluenced manner, **characterized in that** the actuator system includes a brake disc (3) connected to the rotary axis (2) of the roller wheel (1) in a fixed manner with a circumferential rim (3'), which comprises a lateral surface orientated coaxially to the rotary axis (2), alongside which via at least one portion of the lateral surface a band-shaped braking means (4) being in loose frictional contact is included, which is locationally fixed relative to the co-rotating brake disc (3), the band-shaped braking means (4) being operationally connected to an actuator of the actuator system, through which a contact force characterising the loose frictional contact between the band-shaped braking means (4) and the lateral surface of the brake disc (3) can be varied and **in that** the actuator can be reversibly transferred between at least two actuator positions, a first and a second actuator position, wherein the actuator in the first actuator position initiates a maximum and in the second actuator position a minimum contact force.

2. The anti-theft system according to Claim 1, **characterized in that** the band-shaped braking means (4) comprises two band ends of which a band end is connected on a fixed counter bearing and the other band end is connected to the actuator likewise attached to a fixed counter bearing.

3. The anti-theft system according to Claim 1, **characterized in that** the band-shaped braking means (4) is designed as continuous band in the form of a band loop, at least half of which encloses the lateral surface of the brake disc (3), and **in that** the actuator is arranged and designed in such a manner that the band loop (4) is held under tension by means of the actuator.

4. The anti-theft system according to any one of the Claims 1 to 3, **characterized in that** the actuator comprises a linearly moveable control element which is connected to the band-shaped means (4).

5. The anti-theft system according to Claim 4, **characterized in that** the actuator comprises a converter material consisting of a material of the following group: piezoelectric ceramic, magnetostrictive material, shape memory metal.

6. The anti-theft system according to any one of the Claims 1 to 3, **characterized in that** the actuator comprises a rotary drive having a rotary axis, on which a return contour (5) is provided, alongside which the band-shaped braking means (4) is articulated.

7. The anti-theft system according to Claim 6, **characterized in that** the rotary drive is designed as electric motor.

8. The anti-theft system according to the preamble of Claim 1, **characterized in that** the actuator system comprises a means of disc-like design that is connected to the rotary axis (2) of the roller wheel (1) in a fixed manner, which comprises an engagement contour peripherally surrounding the means **in that** a rotation damper (8) that is connected to the roller wheel (1) in a rotationally fixed manner and radially spaced from the engagement contour is provided, which comprises engagement elements (9) that can be brought into engagement with the engagement contour and **in that** the rotation damper (8) can be moved out of a first radial position, in which there is no engagement with the engagement contour of the means, into a second radial position, in which the engagement elements (9) enter into operational connection with the engagement contour of the means.

9. The anti-theft system according to Claim 8, **characterized in that** the rotation damper (8) is rotatably arranged on the roller wheel (1), and **in that** the rotation damper (8) has a greater rotary resistance than the roller wheel (1) so that the rotation damper (8) in the second position exerts a braking moment on the roller wheel (1).

10. The anti-theft system according to Claim 8 or 9, **characterized in that** the rotation damper (8) with an activatable linear drive can be transferred between the first and second position and vice versa.

11. The anti-theft system according to Claim 10, **characterized in that** the linear drive comprises a converter material, consisting of a material of the following group: piezoelectric ceramic, magnetostrictive material, shape memory metal.

12. The anti-theft system according to anyone of the Claims 8 to 11, **characterized in that** the rotation damper (8) is a hydraulic rotation damper, or **in that** the rotation damper (8) comprises an electric motor operated as generator, the braking moment of which can be scaled through adjusting a short-circuit current.

13. The anti-theft system according to the preamble of Claim 1, **characterized in that** the actuator system through activating causes an off-centre shift of the rotary axis (2) that can be assigned to the roller wheel (1) relative to the circumferential rim of the roller wheel (1), and **in that** the rotary axis (2) of the roller wheel (1) can be transferred out of a first position, in which the rotary axis (8) centrally protrudes through the roller wheel (1) into a second position, in which the roller wheel (1) eccentrically rotates about the rotary axis (2).

14. The anti-theft system according to Claim 13, **characterized in that** rotatably on the roller wheel (1) a disc-like means (11), in the following means, with an outer toothing is attached in such a manner that a rotary axis (12) that can be assigned to the means is attached off centre to the roller wheel (1), **in that** the means provides a recess through which the rotary axis (2) of the roller wheel (1) protrudes and is rotatably mounted in the rotary axis (12) both to the means as well as to the roller wheel (1), and **in that** a drive designed screw-like is provided, which is in engagement with the outer toothing of the means, the means is mounted about the rotary axis (12) that can be assigned to the means and which upon activating rotates the means about the rotary axis (1) that can be assigned to the means.

15. The anti-theft system according to Claim 14, **characterized in that** the drive designed screw-like is attached to the roller wheel.

## Revendications

1. Système d'antivol pour chariots de transport maniables manuellement, notamment pour caddies, qui disposent de roulettes pour avancer, le système d'antivol contenant au moins une de ces roulettes équipée d'une unité influençant le comportement de roulement de la roulette, ci-après unité courte, qui peut passer d'une position de départ, dans laquelle au moins une roulette (1) n'est pas influencée, par activation à une position influençant le comportement de roulement de la roulette (1), et pour l'activation de laquelle au moins une unité de réception est prévue, qui reçoit un signal de commande, dès que le chariot de transport quitte une zone autorisée, déterminée par une infrastructure de supervision générant le signal de commande, dans lequel l'unité contient un système d'actionneur, qui exerce du fait de l'activation un couple de freinage prescriptible de manière dosée sur la roulette (1), qui empêche la roulette (1) de tourner de manière non influencée autour de l'axe de rotation (2) coordonné à la roulette, **caractérisé en ce que** le système d'actionneur contient un disque de frein (3) relié fixement à l'axe de rotation (2) de la roulette avec un bord circonférentiel (3'), qui présente une surface de gaine orientée coaxialement à l'axe de rotation (2), le long de laquelle via au moins une portion de la surface de gaine un moyen de freinage (4) en forme de bande est contenu en contact de friction réversible, lequel est stationnaire par rapport au disque de frein (3) co-rotatif, le moyen de freinage (4) en forme de bande est un liaison opérationnelle avec un actionneur du système d'actionneur, par l'intermédiaire duquel une force de pressage caractérisant un contact de friction réversible entre le moyen de freinage en forme de bande (4) et la surface de gaine du disque de frein (3) peut être variée et **en ce que** l'actionneur peut passer de manière réversible entre au moins deux positions d'actionneur, une première et une deuxième position d'actionneur, dans lequel l'actionneur initie dans la première position d'actionneur une force de pressage maximale et dans la deuxième position d'actionneur une force de pressage minimale.

2. Système d'antivol selon la revendication 1, **caractérisé en ce que** le moyen de freinage en forme de bande (4) présente deux extrémités de bande, desquelles une extrémité de bande est reliée à une contrebutée fixe et l'autre extrémité de bande est reliée également à un actionneur monté sur une contrebutée fixe.

3. Système d'antivol selon la revendication 1, **caractérisé en ce que** le moyen de freinage (4) en forme de bande est conçu comme une bande sans fin sous forme d'une sangle, qui enveloppe la surface de gaine du disque de frein (3) au moins en moitié, et **en ce que** l'actionneur est disposé et conçu de telle sorte que la sangle (4) soit maintenue sous une tension de traction au moyen de l'actionneur.

4. Système d'antivol selon une des revendications 1 à 3, **caractérisé en ce que** l'actionneur présente un élément de réglage à mouvement linéaire, qui est relié au moyen de freinage en forme de bande (4).

5. Système d'antivol selon la revendication 4, **caractérisé en ce que** l'actionneur présente un matériau transducteur, constitué d'un matériau du groupe suivant : céramique piézoélectrique, matériau magnétostrictif, métal à mémoire de forme.

6. Système d'antivol selon une des revendications 1 à 3, **caractérisé en ce que** l'actionneur présente un entraînement rotatif comportant un axe de rotation, sur lequel un contour de déflexion est prévu, le long duquel le moyen de freinage (4) en forme de bande est articulé.

7. Système d'antivol selon la revendication 6, **caractérisé en ce que** l'entraînement rotation est conçu comme un moteur électrique.

8. Système d'antivol selon le préambule de la revendication 1, **caractérisé en ce que** le système d'actionneur présente un moyen réalisé en forme de disque, relié fixement à l'axe de rotation (2) de la roulette (1), qui dispose d'un contour d'engrènement entourant périphériquement le centre, qui est relié de manière solidaire en rotation à la roulette (1) et un amortisseur de rotation (8) espacé radialement par rapport au contour d'engrènement est prévu, lequel présente des éléments d'engrènement (9), qui peuvent être amenés en prise avec le contour d'engrènement, et **en ce que** l'amortisseur de rotation (8) peut passer d'une première position radiale, dans laquelle aucune mise en prise avec le contour d'engrènement du moyen n'a lieu, à une deuxième position radiale, dans laquelle les éléments d'engrènement (9) viennent en liaison opérationnelle avec le contour d'engrènement du moyen.

9. Système d'antivol selon la revendication 8, **caractérisé en ce que** l'amortisseur de rotation (8) est disposé rotativement sur la roulette (1) et **en ce que** l'amortisseur de rotation (8) présente une plus grande résistance à la rotation que la roulette (1), de sorte que l'amortisseur de rotation (8) exerce dans la deuxième position un couple de freinage sur la roulette.

10. Système d'antivol selon les revendications 8 ou 9, **caractérisé en ce que** l'amortisseur de rotation (8) peut passer avec un entraînement linéaire pilotable de la première à la deuxième position et inversement.

11. Système d'antivol selon la revendication 10, **caractérisé en ce que** l'entraînement linéaire présente un matériau transducteur, constitué d'un matériau du groupe suivant : céramique piézoélectrique, matériau magnétostrictif, métal à mémoire de forme.

12. Système d'antivol selon une des revendications 8 à 11, **caractérisé en ce que** l'amortisseur de rotation (8) est un amortisseur de rotation hydraulique, ou **en ce que** l'amortisseur de rotation (8) présente un moteur électrique exploité comme générateur, dont le couple de freinage peut être gradué par réglage d'un courant de court-circuit.

13. Système d'antivol selon le préambule de la revendication 1, **caractérisé en ce que** le système d'actionneur conditionne par actionnement d'un déplacement excentré l'axe de rotation (2) coordonné à la roulette relativement au bord circonférentiel de la roulette (1), et **en ce que** l'axe de rotation (2) de la roulette (1) peut être passé d'une première position, dans laquelle l'axe de rotation (8) dépasse au centre de la roulette (1), dans une deuxième position, dans laquelle la roulette tourne de manière excentrique autour de l'axe de rotation (2).

14. Système d'antivol selon la revendication 13, **caractérisé en ce que** un moyen en forme de disque (11) est monté rotativement sur la roulette (1), ci-après un moyen, avec une denture extérieure de sorte que un axe de rotation (12) coordonné au moyen soit monté de manière excentrée par rapport à la roulette (1), **en ce que** le moyen présente un évidement, à travers lequel l'axe de rotation de la roulette (1) saille et dans lequel l'axe de rotation (12) est positionné rotativement tant par rapport au moyen que par rapport à la roulette (1), et **en ce que** un entraînement réalisé en forme de broche est prévu, lequel vient en prise avec la denture externe du moyen, qui positionne le moyen de manière solidaire en rotation autour de l'axe de rotation (12) coordonné au moyen et qui tourne en cas d'actionnement le moyen autour de l'axe de rotation (12) coordonné au moyen.

15. Système d'antivol selon la revendication 14, **caractérisé en ce que** l'entraînement réalisé en forme de broche est monté sur la roulette.
